# EUROPÄISCHE PATENTSCHRIFT

(11) **EP 1 343 237 B1**
(45) Veröffentlichungstag und Bekanntmachung des Hinweises auf die Patenterteilung: **12.05.2004**
(21) Anmeldenummer: 03004621.3
(22) Anmeldetag: 03.03.2003
(51) Int. Cl.: H02G 3/10, H02G 3/12

(54) **Elektrisches Gerät**
Electrical apparatus
Appareil électrique

(30) Priorität: 09.03.2002 DE 20203847 U
(43) Veröffentlichungstag der Anmeldung: 10.09.2003
(73) Patentinhaber: GIRA GIERSIEPEN GmbH. & CO. KG, D-42477 Radevormwald (DE)
(72) Erfinder: Dornseiff, André, 42499 Hückeswagen (DE)
(74) Vertreter: Patentanwälte Dr. Solf & Zapf

(56) Entgegenhaltungen:
- JP-A- 11 260 483
- US-A- 5 220 712

## Beschreibung

Die vorliegende Erfindung betrifft ein elektrisches Gerät mit einem Gehäuse und mit innerhalb des Gehäuses in einem Anschlußraumbereich angeordneten elektrischen Anschlußelementen für von außen zuzuführende Anschlußleiter.

Elektrische Geräte sind in den verschiedenartigsten Ausführungen bekannt. So werden beispielsweise im Rahmen der Gebäude-Elektroinstallation Unterputz (UP)-Geräte und teilweise auch Aufputz (AP)-Geräte eingesetzt. Dabei wird jeweils von außen her ein - selbst wahlweise unter oder auf Putz (UP/AP) verlegtes - Anschlußkabel zugeführt, dessen Anschlußleiter an elektrischen Anschlußelementen innerhalb des Gerätes anzuschließen sind. Vor allem bei sehr kleinen und kompakten und daher im GehäuseInneren engen Geräten ist dieses Anschließen recht kompliziert und erfordert eine gute Fingerfertigkeit, weil der Arbeitsraum im Anschlußraumbereich sehr eng ist. Die einzelnen Leiter müssen unter starker Biegeverformung umständlich in die - üblicherweise als Klemmen ausgebildeten - Anschlußelemente eingeführt werden.

Der vorliegenden Erfindung liegt die Aufgabe zugrunde, ein elektrisches Gerät der genannten Art zu schaffen, bei dem die äußeren Anschlußleiter auf einfachere und komfortable Weise an den Anschlußelementen angeschlossen werden können.

Erfindungsgemäß wird dies dadurch erreicht, dass die Anschlußelemente innerhalb des Gehäuses derart lageveränderbar sind, dass sie aus einer Geräte-Betriebsposition unter Vergrößerung des Anschlußraumbereichs in eine Anschlußposition und zurück überführbar sind.

Durch diese vorteilhafte Ausgestaltung läßt sich somit der Anschlußraumbereich vergrößern, so dass ein die Anschlußleiter enthaltendes äußeres Anschlußkabel auf einfache Weise einführbar ist und innerhalb des vergrößerten Anschlußraumbereichs wegen des größeren Bewegungsspielraums das Kabel abgemantelt und die einzelnen Anschlußleiter abisoliert und unter entsprechender Biegeverformung an den Anschlußelementen angeschlossen werden können. Nach dem eigentlichen elektrischen Anschluß werden dann die Anschlußelemente unter entsprechender Wieder-Verkleinerung des Anschlußraumbereichs sowie unter weitergehender Biegeverformung der Anschlußleiter in die Geräte-Gebrauchsposition zurückbewegt.

.Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll die Erfindung genauer erläutert werden.

Dabei zeigen:
- Fig. 1: eine Perspektivansicht einer möglichen Ausführung eines erfindungsgemäßen elektrischen Gerätes auf dessen Vorderseite,
- Fig. 2: eine vergrößerte Perspektivansicht auf die Rück- bzw. Unterseite des Gerätes in Pfeilrichtung II gemäß Fig. 1,
- Fig. 3: eine Perspektivansicht des Gerätes in einem geöffnetem Zustand zur Einsicht auf den Anschlußraumbereich, und zwar in der eigentlichen Geräte-Gebrauchs-bzw. Betriebsposition,
- Fig. 4: eine Ansicht wie in Fig. 3, jedoch in einem anschlußbereiten Zustand in der Anschlußposition,
- Fig. 5 a bis 5c: vergrößerte Schnittdarstellungen in der Ebene V - V gemäß Fig. 3 in unterschiedlichen Zuständen und
- Fig. 6: eine vergrößerte Teilschnittdarstellung in der Ebene VI - VI gemäß Fig. 4.

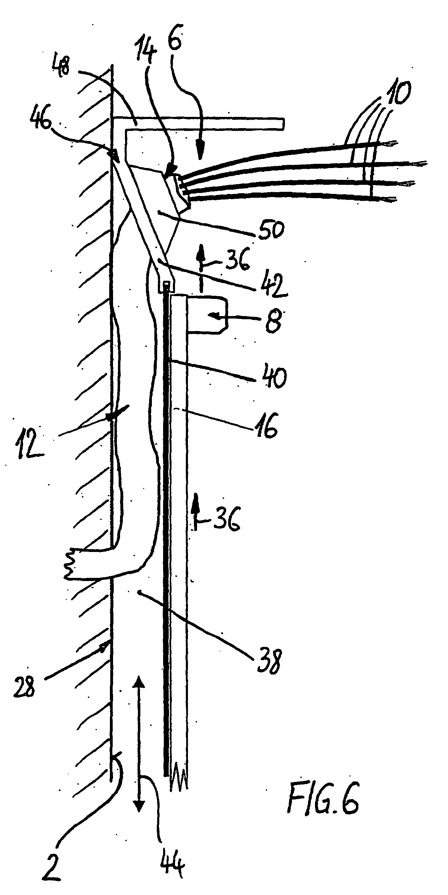

In dem veranschaulichten Ausführungsbeispiel ist ein elektrisches Gerät 1 zur Installation auf einer - insbesondere durch eine vertikale Wand gebildeten - Montagefläche 2 (siehe Fig. 6) vorgesehen, d. h. zur sogenannten Aufputz-Montage. Alternativ kann es sich auch um ein Unterputz-Gerät handeln.

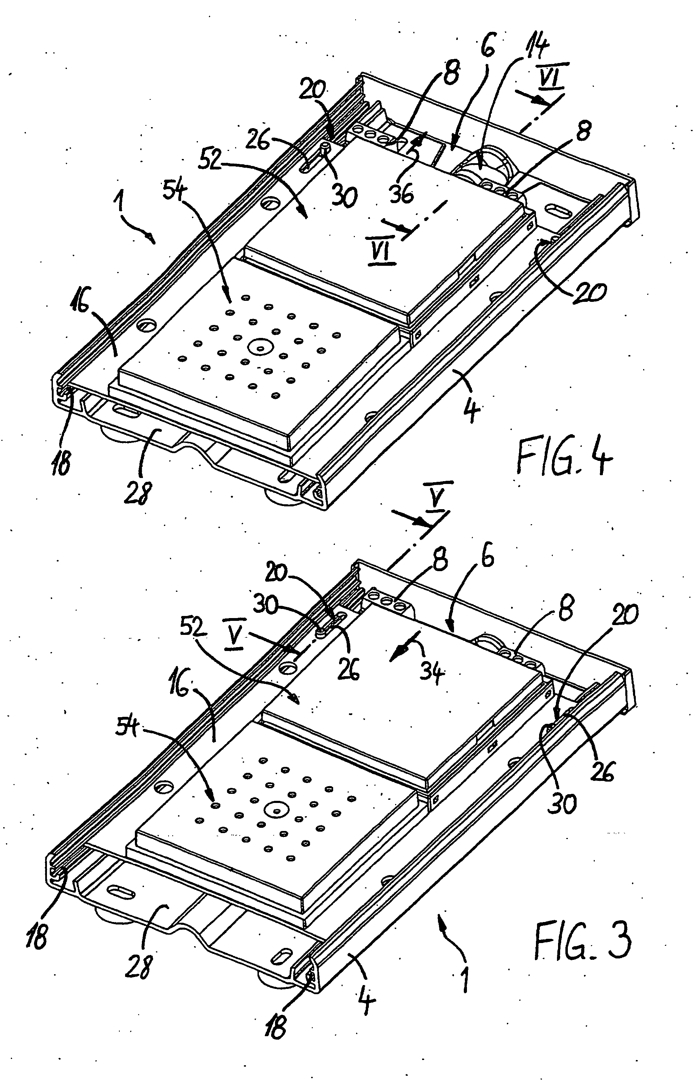

Wie sich aus den Fig. 3 bis 6 ergibt, sind innerhalb des Gehäuses 4 in einem . Anschlußraumbereich 6 elektrische Anschlußelemente 8 beispielsweise in Form von Leiterklemmen zum Anschluß von Anschlußleitern 10 angeordnet. Üblicherweise wird gebäudeseitig ein Anschlußkabel 12 (Fig. 6) unter Putz verlegt. Dieses Anschlußkabel 12 enthält die Anschlußleiter 10 und wird mit einem Anschlußende durch eine Kabel-Einführöffnung 14 in den Anschlußraumbereich 6 des Gehäuses 4 eingeführt, um in diesem Bereich die Anschlußleiter 10 an den Anschlußelementen 8 anzuschließen.

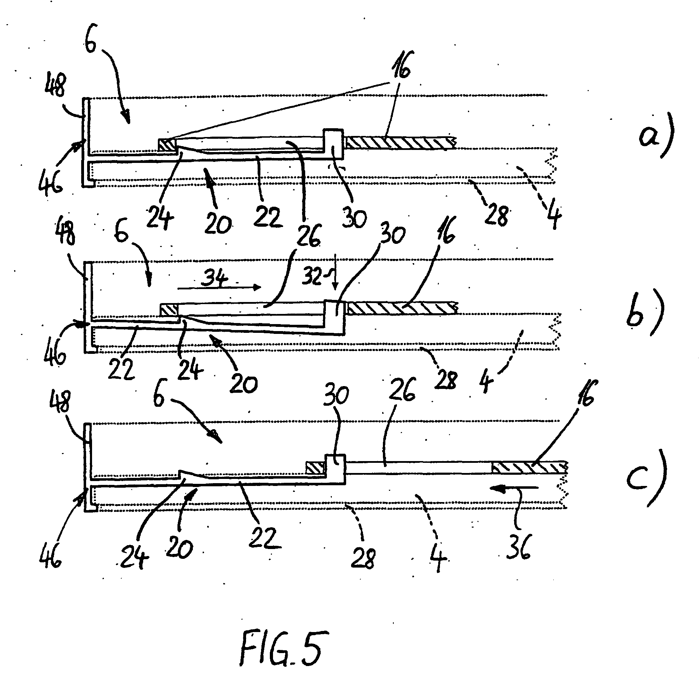

Erfindungsgemäß sind hierbei die Anschlußelemente 8 innerhalb des Gehäuses 4 derart lageveränderbar, dass sie aus einer Geräte-Betriebsposition (Figuren 3 und 5a, b) unter Vergrößerung des Anschlußraumbereichs 6 in eine Anschlußposition (Figuren 4, 5c und 6) überführbar sind. Wie insbesondere in Fig. 6 veranschaulicht ist, erleichtert der erfindungsgemäß vergrößerbare Anschlußraumbereich 6 das Anschließen der Anschlußleiter 10 an den Anschlußelementen 8 wesentlich, da der Monteur einen größeren Bewegungsspielraum bekommt. Nach erfolgtem Anschluß können die Anschlußelemente 8 mit den angeschlossenen Anschlußleitem zurück in die Betriebsposition des Gerätes 1 überführt werden, und zwar unter entsprechender Biegeverformung der Anschlußleiter 10.

Zweckmäßigerweise sind die Anschlußelemente 8 - vorzugsweise zusammen mit sonstigen Gerätebestandteilen - an einem Trägerelement 16 befestigt, wobei das Trägerelement 16 verschiebbar in dem Gehäuse 4 geführt und zumindest in der Geräte-Betriebsposition der Anschlußelemente 8 lösbar arretiert ist. Vorzugsweise ist das Trägerelement 16 von einer Leiterplatte gebildet, die gemäß Fig. 3 und 4 in seitlichen, schienenartigen Führungsprofilen 18 des Gehäuses 4 verschiebbar geführt ist. Wie sich aus den Figuren 3 bis 5 ergibt, sind zum lösbaren Arretieren des Trägerelementes 16 Rastmittel 20 vorgesehen. Im dargestellten, bevorzugten Ausführungsbeispiel ist als Rastmittel 20 mindestens ein federelastischer Rastarm 22 vorgesehen (siehe dazu insbesondere Fig. 5), der einendig im Gehäuse 4 befestigt ist und in der Gebrauchsposition (Fig. 5a) mit einer Rastnase 24 in eine Rastausnehmung 26 des Trägerelementes 16 eingreift. Hierbei ist die Rastausnehmung 26 mit Vorteil als ein sich in Verschieberichtung des Trägerelementes 16 erstreckendes Langloch ausgebildet (Fig. 3 und 4), wobei der Rastarm 22 dazu parallel insbesondere unterhalb des Trägerelementes 16 zwischen diesem und einer Gehäuse-Bodenwandung 28 verläuft. Weiterhin weist der Rastarm 22 an einem freien, sich über die Rastnase 24 hinaus erstreckenden Ende ein vorzugsweise knopfartiges, in die Rastausnehmung 26 eingreifendes Betätigungsstück 30 auf.

Wie sich aus Fig. 5 ergibt, greift der Rastarm 22 in der arretierten Gebrauchsposition mit der Rastnase 24 so in die Rastausnehmung 26 ein, dass eine Verschiebung des Trägerelementes 16 in die Anschlußposition gemäß Fig. 5c gesperrt ist. Dabei sind die Rastnase 24 und das Betätigungsstück 30 in Anpassung an die Länge der Langloch-Rastausnehmung 26 derart voneinander beabstandet, dass das Trägerelement 16 auch in der anderen Verschieberichtung fixiert ist. Somit wird das Trägerelement 16 sicher in seiner Betriebsposition gehalten. Gemäß Fig. 5b kann der Rastarm 22 über das Betätigungsstück 30 in Pfeilrichtung 32 nach unten gedrückt werden, um so die Rastnase 24 außer Eingriff aus der Langloch-Rästausnehmung 26 zu bringen. Nachfolgend kann das Trägerelement 16 zusammen mit den in Fig. 5 nicht dargestellten Anschlußelementen 8 in Pfeilrichtung 34 in die Anschlußposition gemäß Fig. 5c (vgl. auch Fig. 4 und 6) verschoben werden. Gemäß Fig. 5c wird das Trägerelement 16 dadurch gegen zu weites Verschieben fixiert, dass das Betätigungsstück 30 des Rastarms 22 nach dem Betätigen zur Bewegungsbegrenzung innerhalb der Langloch-Rastausnehmung 26 liegt. Nach dem erfolgten Anschluß der . Anschlußleiter 10 wird das Trägerelement 16 im Pfeilrichtung 36 zurück in die Betriebsposition nach Fig. 5a verschoben, bis die Rastnase 24 wieder einrastet.

Wie dargestellt, sind bevorzugt auf beiden Seiten des Trägerelementes 16 jeweils gleichartige Rastmittel 20 vorgesehen.

Die Kabel-Einführöffnung 14 ist im Bereich der Bodenwandung 28 angeordnet und mündet gehäuseinnenseitig in den Anschlußraumbereich 6. Hierbei ist es besonders vorteilhaft, wenn die Bodenwandung 28 auf ihrer zu der Montagefläche 2 weisenden Außenseite mindestens eine kanalförmige Aufnahmevertiefung 38 für das Anschlußkabel 12 aufweist. Dabei liegt die Kabel-Einführöffnung 14 innerhalb des Bereichs der Aufnahmevertiefung 38.

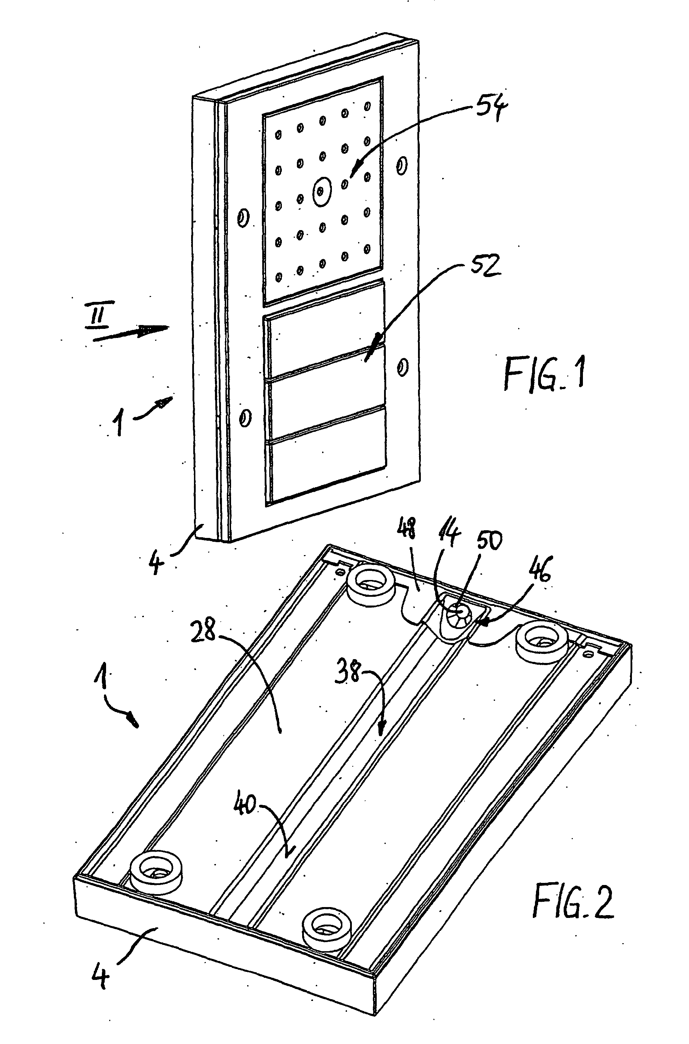

Wie sich insbesondere aus Fig. 2 ergibt, weist das Gehäuse 4 bzw. die Bodenwandung 28 eine längliche, bevorzugt im Wesentlichen rechteckige Grundform auf, wobei die kanalförmige Aufnahmevertiefung 38 geradlinig in Längsrichtung der Bodenwandung 28 und vorzugsweise etwa mittig im Wesentlichen über deren gesamte Erstreckung verläuft. Hierbei ist die Kabel-Einführöffnung 14 in einem Endbereich der kanalförmigen Aufnahmevertiefung 38 angeordnet, und zwar gemäß Fig. 6 insbesondere in einem schräg zwischen der Bodenwandung 28 und einem Vertiefungsgrund 40 verlaufenden Wandungsabschnitt 42. Somit geht die kanalartige Aufnahmevertiefung 38 bevorzugt an einem Ende unmittelbar in die Kabel-Einführöffnung 14 über. Wie in Fig. 6 veranschaulicht ist, kann das Gerät 1 durch diese vorteilhafte Ausgestaltung auf einfache Weise in Doppelpfeilrichtung 44 (Verlaufsrichtung der kanalartigen Aufnahmevertiefung 38) auf der Montagefläche 2 relativ zu der Stelle des Wandaustritts des Anschlußkabels 12 ausgerichtet werden, wobei dann das Anschlußkabel 12 mehr oder weniger weit durch einen entsprechenden Abschnitt der Aufnahmevertiefung 38 verläuft und im Gehäuseinneren innerhalb des Anschlußraumbereichs 6 direkt hinter der Einführöffnung 8 zum Anschluß abgemantelt werden kann. Für die Kabeleinführung ist es vorteilhaft, wenn der Wandungsabschnitt 42 derart in einem Winkel von vorzugsweise etwa 20° bis 50° schräg zur Bodenwandung 28 verläuft, dass das durch die Aufnahmevertiefung 38 verlaufende Anschlußkabel 12 unter einer etwa rechtwinkligen Umbiegung durch die Einführöffnung 14 geführt werden kann.

Hierbei ist in weiterer vorteilhafter Ausgestaltung eine Spritzwasser-Abdichtung im Bereich der Einführöffnung 14 vorgesehen. Dazu ist die Einführöffnung 14 vorzugsweise in einem separaten, im Gehäuse 4 sitzenden Dichtungselement 46 gebildet, welches eine spritzwasserdichte Kabeleinführung (entsprechend IP44) gewährleistet. Wie sich weiterhin aus Fig. 6 ergibt, besteht das Dichtungselement 46 aus einem Halteabschnitt 48 zur Halteverbindung mit dem Gehäuse 4 sowie aus einem tüllenartigen, die Kabel-Einführöffnung 14 umschließenden Dichtabschnitt 50. Dieser tüllenartige Dichtabschnitt 50 bildet eine elastische Lippendichtung zur umfänglichen Auflage auf dem Anschlußkabel 12. Dabei ist die Einführöffnung 14 kreisförmig und mit einem zunächst geringeren Durchmesser als das Anschlußkabel 10 ausgebildet. Das Dichtungselement 46 ist vorzugsweise einteilig als Zweikomponenten-Formteil aus Kunststoff gebildet. Dabei bestehen der Halteabschnitt 48 aus einem relativ festeren, formstabileren Kunststoffmaterial und der Dichtabschnitt 50 aus einem relativ flexibleren, elastischen Kunststoffmaterial.

Das Dichtungselement 46 kann mit Vorteil im Bereich des Halteabschnittes 48 einstückig mit den Rastarmen 22 ausgebildet sein (Fig. 5).

Die Erfindung ist nicht auf das dargestellte und beschriebene Ausführungsbeispiel beschränkt, sondern umfaßt auch alle im Sinne der Erfindung gleichwirkenden Ausführungen. So kann es sich um ein grundsätzlich beliebiges Gerät handeln, wenn auch in der bevorzugten Ausführungsform das Gerät 1 in flacher, kompakter Bauform beispielsweise als eine Türstation einer Hauskommunikationsanlage ausgebildet ist und dazu eine Tasteneinrichtung 52 (Klingeltasten) und eine Lautsprechereinrichtung 54 aufweist (Fig. 1, 3 und 4).

## Patentansprüche

1. Elektrisches Gerät (1) mit einem Gehäuse (4) und mit innerhalb des Gehäuses (4) in einem Anschlußraumbereich (6) angeordneten elektrischen Anschlußelementen (8) für von außen zuzuführende Anschlußleiter (10),
**dadurch gekennzeichnet, dass** die Anschlußelemente (8) innerhalb des Gehäuses (4) derart lageveränderbar sind, dass sie aus einer Geräte-Betriebsposition unter Vergrößerung des Anschlußraumbereichs (6) in eine Anschlußposition und zurück überführbar sind.

2. Elektrisches Gerät nach Anspruch 1,
**dadurch gekennzeichnet, dass** die Anschlußelemente (8) - vorzugsweise zusammen mit sonstigen Gerätebestandteilen (52, 54) - an einem Trägerelement (16) befestigt sind, wobei das Trägerelement (16) verschiebbar in dem Gehäuse (4) geführt und zumindest in der Geräte-Betriebsposition der Anschlußelemente (8) lösbar arretiert ist.

3. Elektrisches Gerät nach Anspruch 2,
**dadurch gekennzeichnet, dass** das Trägerelement (16) von einer Leiterplatte gebildet ist, die in seitlichen, schienenartigen Führungsprofilen (18) des Gehäuses (4) verschiebbar geführt ist.

4. Elektrisches Gerät nach Anspruch 2 oder 3,
**dadurch gekennzeichnet, dass** zum lösbaren Arretieren des Trägerelementes (16) Rastmittel (20) vorgesehen sind.

5. Elektrisches Gerät nach Anspruch 4,
**dadurch gekennzeichnet, dass** als Rastmittel (20) mindestens ein federelastischer Rastarm (22) vorgesehen ist, der einendig im Gehäuse (4) befestigt ist und in der Gebrauchsposition mit einer Rastnase (24) in eine Rastausnehmung (26) des Trägerelementes (16) eingreift.

6. Elektrisches Gerät nach Anspruch 5,
**dadurch gekennzeichnet, dass** die Rastausnehmung (26) als ein sich in Verschieberichtung (34, 36) des Trägerelementes (16) erstreckendes Langloch ausgebildet ist, wobei der Rastarm (22) dazu parallel insbesondere unterhalb des Trägerelementes (16) zwischen diesem und einer Gehäuse-Bodenwandung (28) verläuft.

7. Elektrisches Gerät nach Anspruch 5 oder 6,
**dadurch gekennzeichnet, dass** der Rastarm (22) an einem freien, sich über die Rastnase (24) hinaus erstreckenden Ende ein vorzugsweise knopfartiges Betätigungsstück (30) aufweist, welches derart in die Rastausnehmung (26) eingreift, dass durch Druck auf das Betätigungsstück (30) und dadurch bewirkte elastische Verformung des Rastarms (22) die Rastnase (24) außer Eingriff aus der Rastausnehmung (26) bringbar ist.

8. Elektrisches Gerät nach Anspruch 7,
**dadurch gekennzeichnet, dass** die Rastnase (24) und das Betätigungsstück (30) in Anpassung an die Länge der Langloch-Rastausnehmung (26) derart voneinander beabstandet sind, dass das Trägerelement (16) in einer eingreifenden Ruhelage des Rastarms (22) in der Betriebsposition in beiden Richtungen fixiert ist.

9. Elektrisches Gerät nach einem der Ansprüche 4 bis 8,
**dadurch gekennzeichnet, dass** auf beiden Seiten des Trägerelementes (16) jeweils gleichartige Rastmittel (20) vorgesehen sind.

10. Elektrisches Gerät nach einem der Ansprüche 1 bis 9,
**gekennzeichnet durch** eine Ausführung als Aufputz-Gerät zur Montage auf einer Montagefläche (2), wobei das Gehäuse (4) eine der Montagefläche (2) zuzukehrende Bodenwandung (28) mit einer gehäuseinnenseitig in den Anschlußraumbereich (6) mündenden Einführöffnung (14) für ein. die Anschlußleiter (10) enthaltendes, äußeres, von der Montagefläche (2) her zuzuführendes Anschluß-Kabel (12) aufweist.

11. Elektrisches Gerät nach Anspruch 10,
**dadurch gekennzeichnet, dass** die Bodenwandung (28) auf ihrer zu der Montagefläche (2) weisenden Außenseite eine kanalförmige Aufnahmevertiefung (38) für das Anschlußkabel (12) aufweist, wobei die Kabel-Einführöffnung (14) innerhalb des Bereichs der Aufnahmevertiefung (38) liegt.

12. Elektrisches Gerät nach Anspruch 11,
**dadurch gekennzeichnet, dass** das Gehäuse (4) bzw. die Bodenwandung (28) eine längliche, bevorzugt im Wesentlichen rechteckige Grundform aufweist, wobei die kanalförmige Aufnahmevertiefung (38) insbesondere geradlinig in Längsrichtung der Bodenwandung (28) und bevorzugt etwa mittig im Wesentlichen über deren gesamte Erstreckung verläuft.

13. Elektrisches Gerät nach Anspruch 11 oder 12,
**dadurch gekennzeichnet, dass** die Kabel-Einführöffnung (14) in einem Endbereich der kanalförmigen Aufnahmevertiefung (38), vorzugsweise in einem insbesondere schräg zwischen der Bodenwandung (28) und einem Vertiefungsgrund (40) verlaufenden Wandungsabschnitt (42) angeordnet ist.

14. Elektrisches Gerät nach einem der Ansprüche 11 bis 13,
**dadurch gekennzeichnet, dass** die Kabel-Einführöffnung (14) eine Spritzwasser-Abdichtung aufweist und dazu insbesondere in einem separaten, im Gehäuse (4) sitzenden Dichtungselement (46) gebildet ist.

15. Elektrisches Gerät nach Anspruch 14,
**dadurch gekennzeichnet, dass** das Dichtungselement (46) aus einem Halteabschnitt (48) zur Halteverbindung mit dem Gehäuse (4) und einem insbesondere tüllenartigen, die Kabel-Einführöffnung (14) umschließenden Dichtabschnitt (50) besteht.

16. Elektrisches Gerät nach Anspruch 15,
**dadurch gekennzeichnet, dass** das Dichtungselement (46) einteilig als Zweikomponenten-Formteil aus Kunststoff gebildet ist, wobei der Halteabschnitt (48) aus einem relativ festeren, formstabileren Kunststoffmaterial und der Dichtabschitt (50) aus einem relativ flexibleren, elastischen Kunststoffmaterial bestehen.

## Claims

1. Electrical device (1) having a housing (4) and having electrical connecting elements (8) for connecting conductors (10) to be run in from outside, which electrical connecting elements (8) are arranged inside the housing (4) in a connection-space region (6), **characterised in that** the position of the connecting elements (8) within the housing (4) can be changed in such a way that they can be transferred from a position in which the device is operational to a connecting position, in the course of which the connection-space region (6) is enlarged, and back.

2. Electrical device according to claim 1, **characterised in that** the connecting elements (8) - preferably together with other components (52, 54) of the device - can be fastened to a carrier member (16), the carrier member (16) being displaceably guided in the housing (4) and being releasably locked at least in the position of the connecting elements (8) in which the device is operational

3. Electrical device according to claim 2, **characterised in that** the carrier member (16) is formed by a printed circuit board which is displaceably guided in lateral, rail-like guiding profiles (18) belonging to the housing (4).

4. Electrical device according to claim 2 or 3, **characterised in that** latching means (20) are provided for the releasable locking of the carrier member (16).

5. Electrical device according to claim 4, **characterised in that** what is provided as the locking means (20) is at least one resilient latching arm (22) which is fastened at one end in the housing (4) and which has a latching nose (24) which engages in a latching opening (26) in the carrier member (16) in the in-use position.

6. Electrical device according to claim 5, **characterised in that** the latching opening (26) is in the form of an elongated hole extending in the direction of displacement (34, 36) of the carrier member (16), the latching arm (22) extending parallel thereto, in particular below the carrier member (16) between the latter and a wall (28) forming the floor of the housing

7. Electrical device according to claim 5 or 6, **characterised in that** the latching arm (22) has, at a free end which extends beyond the latching nose (24), a preferably button-like actuating portion (30) which engages in the latching opening (26) in such a way that the latching nose (24) can be brought out of the latching opening (26) and out of engagement by pressure applied to the actuating portion (30) and by the elastic deformation of the latching arm (22) that is thereby produced.

8. Electrical device according to claim 7, **characterised in that** the latching nose (24) and the actuating portion (30) are spaced away from one another in a match to the length of the latching opening (26) in the form of an elongated hole, in such a way that the carrier member (16) is fixed in the operating position in both directions when the latching arm (22) is in an engaged rest position.

9. Electrical device according to one of claims 4 to 8, **characterised in that** latching means (20) of the same kind are provided on each of the two sides of the carrier member (16).

10. Electrical device according to one of claims 1 to 9, **characterised by** production as a surface-mounted device for mounting on a mounting surface (2), the housing (4) having a wall (28) forming its floor which is to face towards the mounting surface (28) and which has an insertion opening (14), which opens on the inside of the housing into the connection-space region (6), for an external connecting cable (12) which is to be run in from the mounting surface (2) and which contains the connecting conductors (10).

11. Electrical device according to claim 10, **characterised in that**, on its outer side which is directed towards the mounting surface (2), the wall (28) forming the floor has a channel-like receiving depression (38) for the connecting cable (12), the cable insertion opening (14) being situated within the region occupied by the receiving depression (38).

12. Electrical device according to claim 11, **characterised in that** the basic shape of housing (4) or the wall (28) forming its floor is elongated and preferably substantially rectangular, with the channel-like receiving depression (38) extending, in particular, in a straight line in the longitudinal direction of the wall (28) forming the floor and preferably approximately centrally for substantially the entire extent of the latter.

13. Electrical device according to claim 11 or 12, **characterised in that** the cable insertion opening (14) is arranged in one end region of the channel-like receiving depression (38), preferably in a portion (42) of wall which extends, in particular, obliquely between the wall (28) forming the floor and a floor (40) of the depression.

14. Electrical device according to one of claims 11 to 13, **characterised in that** the cable insertion opening (14) has a seal against splashed or sprayed water and for this purpose is formed in particular in a separate sealing member (46) which is seated in the housing (4).

15. Electrical device according to claim 14, **characterised in that** the sealing member (46) comprises a retaining section (48) for retained connection to the housing (4) and a sealing section which encloses the cable insertion opening (14) and is, in particular, sleeve-like.

16. Electrical device according to claim 15, **characterised in that** the sealing member (46) is formed in one piece as a two-component moulding of plastics material, the retaining section (48) being composed of a relatively more firm, more dimensionally stable plastics material and the sealing section (5) being composed of a relatively more flexible, elastic plastics material.

## Revendications

1. Appareil électrique (1) comprenant un boîtier (4) et des éléments de connexion électriques (8) pour des conducteurs de connexion (10) arrivant de l'extérieur, disposés à l'intérieur du boîtier (4) dans une région d'espace de connexion (6),
**caractérisé en ce que** les éléments de connexion (8) peuvent être changés de position à l'intérieur du boîtier (4) et **en ce qu'**ils peuvent être amenés d'une position de service de l'appareil à une position de connexion, avec agrandissement de la région d'espace de connexion (6) et ramenés à la position de service.

2. Appareil électrique selon la revendication 1,
**caractérisé en ce que** les éléments de connexion (8) sont fixés à un élément de support (16) - de préférence conjointement avec d'autres éléments constitutifs (52, 54) de l'appareil - l'élément de support (16) étant guidé mobile en translation dans le boîtier (4) et étant verrouillé de façon déverrouillable dans la position des éléments de connexion (8) qui correspond à la position de service de l'appareil..

3. Appareil électrique selon la revendication 2,
**caractérisé en ce que** l'élément de support (16) est formé d'un circuit imprimé qui est guidé mobile en translation dans des profils de guidage latéraux (18) en forme de rails du boîtier (4).

4. Appareil électrique selon la revendication 2 ou 3,
**caractérisé en ce que** des moyens d'enclenchement (20) sont prévus pour le verrouillage déverrouillable de l'élément de support (16).

5. Appareil électrique selon la revendication 4,
**caractérisé en ce qu'**il est prévu comme moyens d'enclenchement (20) au moins un bras d'enclenchement (22) élastique à la façon d'un ressort qui est fixé dans le boîtier (4) par une extrémité et qui, dans la position d'utilisation, est engagé par une dent d'enclenchement (24) dans un évidement d'enclenchement (26) de l'élément de support (16).

6. Appareil électrique selon la revendication 5,
**caractérisé en ce que** l'évidement d'enclenchement (26) est constitué par un trou allongé s'étendant dans la direction de translation (34, 36) de l'élément de support (16), le bras d'enclenchement (22) s'étendant pour cela parallèlement à l'élément de support (16), en particulier au-dessous de celui-ci, entre cet élément de support et une paroi de fond (28) du boîtier.

7. Appareil électrique selon la revendication 5 ou 6,
**caractérisé en ce que** le bras d'enclenchement (22) présente, à une extrémité libre qui s'étend au-delà de la dent d'enclenchement (24), un élément d'actionnement (30), de préférence en forme de bouton, qui est engagé dans l'évidement d'enclenchement (26) de telle manière que la dent d'enclenchement (24) puisse être mise hors de prise avec l'évidement d'enclenchement (26) par une pression sur l'élément d'actionnement (30) et par la déformation élastique du bras d'enclenchement (22) déterminée par cette pression.

8. Appareil électrique selon la revendication 7,
**caractérisé en ce que** la dent d'enclenchement (24) et l'élément d'actionnement (30) sont espacés l'un de l'autre dans une mesure adaptée à la longueur de l'évidement d'enclenchement (26) en forme de trou allongé, de telle manière que, dans la position de service, l'élément de support (16) soit immobilisé dans les deux sens dans une position de repos en prise du bras d'enclenchement (22).

9. Appareil électrique selon une des revendications 4 à 8,
**caractérisé en ce que** des moyens d'enclenchement (20) d'un même genre sont prévus sur les deux côtés de l'élément de support (16).

10. Appareil électrique selon une des revendications 1 à 9,
**caractérisé par** sa réalisation sous la forme d'un appareil en applique destiné à être monté sur une surface de montage (2), le boîtier (4) présentant une paroi de fond (28) qui devra être dirigée vers la surface de montage (2) et présentant une ouverture d'introduction (14) débouchant à l'intérieur du boîtier dans la région de l'espace de connexion (6), pour recevoir un câble de connexion extérieur (12), qui contient les conducteurs de connexion (10) et qui doit être amené en provenance de la surface de montage (2).

11. Appareil électrique selon la revendication 10,
**caractérisé en ce que** la paroi de fond (28) présente, sur son côté extérieur dirigé vers la surface de montage (2), un approfondissement de réception (38) en forme de canal prévu pour le câble de connexion (12), l'ouverture d'introduction (14) du câble se trouvant dans les limites de la région de l'approfondissement de réception (38).

12. Appareil électrique selon la revendication 11,
**caractérisé en ce que** le boîtier (4) ou la paroi de fond (28) présente une forme principale allongée, de préférence sensiblement rectangulaire, l'approfondissement de réception (38) en forme de canal s'étendant en particulier en ligne droite dans la direction longitudinale de la paroi de fond (28) et de préférence à peu près au milieu, sensiblement sur toute son extension.

13. Appareil électrique selon la revendication 11 ou 12,
**caractérisé en ce que** l'ouverture d'introduction du câble (14) est disposée dans une région terminale de l'approfondissement de réception (38) en forme de canal, de préférence dans un segment de paroi (42) s'étendant en particulier obliquement entre la paroi de fond (28) et un fond d'approfondissement (40).

14. Appareil électrique selon une des revendications 11 à 13,
**caractérisé en ce que** l'ouverture d'introduction de câble (14) présente une protection étanche pour les projections d'eau et est à cet effet formé en particulier dans un élément d'étanchéité distinct (46) monté dans le boîtier (4).

15. Appareil électrique selon la revendication 14,
**caractérisé en ce que** l'élément d'étanchéité (46) est composé d'un segment de retenue (48) destiné à l'assemblage de retenue avec le boîtier (4) et un segment d'étanchéité (50), en particulier en forme de passe-câble, qui entoure l'ouverture d'introduction de câble (14).

16. Appareil électrique selon la revendication 15,
**caractérisé en ce que** l'élément d'étanchéité (46) est formé en une seule pièce en matière plastique, sous la forme d'une pièce moulée en deux composants, le segment de retenue (48) étant composé d'une matière plastique relativement plus ferme, plus rigide, et le segment d'étanchéité (50) en une matière plastique relativement plus flexible, élastique.
